# EUROPÄISCHE PATENTSCHRIFT

(11) **EP 1 769 991 B1**
(45) Veröffentlichungstag und Bekanntmachung des Hinweises auf die Patenterteilung: **02.09.2009**
(21) Anmeldenummer: 06120771.8
(22) Anmeldetag: 15.09.2006
(51) Int. Cl.: B60T 13/14, B60T 17/02, B60T 8/40

(54) **Bremsdrucksystem**
Brake pressure system
système de pression pour un frein

(30) Priorität: 29.09.2005 DE 102005046655
(43) Veröffentlichungstag der Anmeldung: 04.04.2007
(73) Patentinhaber: ROBERT BOSCH GMBH, 70442 Stuttgart (DE)
(72) Erfinder: Alaze, Norbert, 71706, Markgroeningen (DE); Schaefer, Ernst-Dieter, 74336, Brackenheim (DE); Egle, Marcus, 71691, Freiberg (DE); Michl, Thomas, 70499, Stuttgart (DE); Beling, Horst, 74074, Heilbronn (DE); Habr, Klaus, 70435, Stuttgart (DE); Druckenmueller, Heiko, 71711, Steinheim A.D. Murr (DE); Waldmann, Timo, 74251, Lehrensteinsfeld (DE)

(56) Entgegenhaltungen:
- DE-A1- 10 028 092
- DE-A1-102004 043 118
- DE-A1-102004 061 811
- DE-C1- 4 427 170
- DE-C1- 10 110 658

## Beschreibung

### Stand der Technik

Die Erfindung betrifft ein Drucksystem mit wenigstens zwei Druckkreisen gemäß der im Oberbegriff des Patentanspruches 1 näher definierten Art.

Aus der Praxis bekannte Drucksysteme bzw. Bremsdruckregelsysteme, wie ABS-(Antiblockiersystem), TCS-(Traktions-Control-System) oder ESP-Systeme (Elektronisches Stabilitätsprogramm), sind mit als sogenannte Einkolbenpumpen ausgebildeten Verdrängerelementen ausgeführt, die über einen Exzenter von einem Elektromotor angetrieben werden. Die Einkolbenpumpen fördern während des aktiven Druckaufbaus auf ihrer Druckseite über einen Exzenterwinkel, der kleiner als 180° ist. Im restlichen Phasenwinkelbereich des Exzenters findet pumpenseitig keine Förderung statt.

Das vorbeschriebene Pumpenprinzip ist während der Förderung bzw. während der aktiven Druckaufbauphase durch eine unerwünscht große Drucküberhöhung sowie zu Beginn der Druckaufbauphase durch einen steilen Druckgradienten gekennzeichnet, was nachteilhafterweise eine unerwünschte Geräuschentwicklung insbesondere während komfortorientierter Funktionen der vorgenannten Drucksysteme zur Folge hat. Dabei verursacht die Drucküberhöhung während der Druckaufbau- und Förderphase der Verdrängerelemente niederfrequente Geräusche, wohingegen steile Druckgradienten zu Beginn der Druckaufbauphase die Eigenfrequenzen des gesamten Drucksystems anregen und damit über einen breiten Frequenzbereich eine Geräuschentwicklung verursachen.

Die vorgenannten Drucksysteme sind mit wenigstens zwei Druckkreisen ausgeführt, wobei die Einkolbenpumpen der beiden Druckkreise nicht gleichzeitig, sondern um 180° phasenversetzt zueinander fördern, weshalb die Geräuschentwicklung bzw. das Pumpgeräusch des Drucksystems vor allem während Komfortfunktionen eines ESP-Aggregats, wie einer kontrollierten Abbremsung eines Fahrerassistenzsystems oder einer hydraulisch betriebenen automatischen Parksperre, entsteht, bei deren Betriebsmodus in den beiden Druckkreisen eines ESP-Systems der gleiche Systemdruck eingeregelt wird.

Der vorliegenden Erfindung liegt daher die Aufgabe zugrunde, ein Drucksystem zur Verfügung zu stellen, das auch in ungünstigen Betriebszuständen durch eine geringe Geräuschentwicklung gekennzeichnet ist.

Erfindungsgemäß wird diese Aufgabe mit einem Drucksystem mit den Merkmalen des Patentanspruches 1 gelöst.

### Vorteile der Erfindung

Das erfindungsgemäße Drucksystem ist mit wenigstens zwei jeweils mit einem Verdrängerelement ausgeführten Druckkreisen ausgebildet, die jeweils auf einer Druckseite der Verdrängerelemente über eine Ausgleichseinrichtung derart in Wirkverbindung stehen, dass eine Druckerhöhung im ersten Druckkreis zu einer Druckerhöhung im zweiten Druckkreis führt und die Druckerhöhung des ersten Druckkreises im Wesentlichen um die Druckerhöhung des zweiten Druckkreises reduziert ist.

Die Ausgleichseinrichtung weist eine elastische Membran auf, welche zwischen zwei Grenzverformungszuständen verformbar ist und durch welche die beiden Druckkreise auf den Druckseiten der Verdrängerelemente getrennt sind. Die Membran selbst ist umfangseitig in einem Einspannbereich gehalten und die Grenzverformungszustände sind jeweils durch einen mechanischen Anschlag definiert.

Die vorbeschriebene Ausgestaltung des Drucksystems mit einer eine elastische Membran aufweisenden Ausgleichseinrichtung führt vorteilhafterweise im Vergleich zu aus dem Stand der Technik bekannten Drucksystemen selbst während ungünstiger Betriebszustände zu einer geringeren Geräuschentwicklung, da Druckpulsationen der Verdrängerelemente, die beispielsweise als Einkolbenpumpen ausgeführt sein können, bei gleichem oder unterschiedlichem Systemdruck in den beiden Druckkreisen auf beide Druckkreise innerhalb eines definierten Bereichs verteilbar sind und der Druckgradient zu Beginn einer Druckaufbau- und Förderphase eines Verdrängerelementes auf einfache Art und Weise gegenüber herkömmlichen Drucksystemen reduziert ist.

Zusätzlich ist die Membran mit wenigstens zwei Faltenbereichen ausgeführt, die mit sich überlappenden Bereichen der Membran ausgebildet sind, um während des Ausgleiches von Differenzdrücken zwischen den beiden Druckkreisen die dabei auftretenden Verformungen der Membran und daraus wiederum resultierende Zugbeanspruchungen der Membran im Vergleich zu eben ausgeführten Membranen derart zu verringern, dass diese kleiner als zulässige Grenzwerte sind, oberhalb der die Membran zumindest bereichsweise teilplastisch verformt wird.

Darüber hinaus bietet die erfindungsgemäße Ausgestaltung eines Drucksystems zudem bei gleichem Systemdruck in den beiden Druckkreisen die Möglichkeit, die Pulsationshöhe jeweils zu halbieren und daher beim Antrieb der Verdrängerelemente gleichmäßiger über einen Exzenter oder den gesamten Arbeitswinkelbereich von 360° zu verteilen, wodurch die Grundwelligkeit der Druckverteilung in den Druckkreisen im Vergleich zu aus der Praxis bekannten Drucksystemen vorteilhafterweise geglättet wird. Des Weiteren werden die Druckgradienten zu Beginn einer Druckaufbauphase auf der Druckseite der Verdrängerelemente reduziert, da eine Systemelastizität des Drucksystems zu Beginn der Druckaufbauphase vergrößert ist.

Weitere Vorteile und vorteilhafte Ausgestaltungen des Gegenstandes nach der Erfindung sind der Beschreibung, der Zeichnung und den Patentansprüchen entnehmbar.

### Zeichnung

In der Zeichnung ist ein Ausführungsbeispiel eines erfindungsgemäß ausgeführten Drucksystems schematisch vereinfacht dargestellt, welches in der nachfolgenden Beschreibung näher erläutert wird. Es zeigen:
Figur 1 ein Schaltschema eines erfindungsgemäßen Drucksystems;
Figur 2 einen in Figur 1 näher gekennzeichneten Bereich X des Drucksystems in vergrößerter Darstellung; und
Figur 3 eine graphische Gegenüberstellung zweier Verläufe einer Drucküberhöhung in einem Druckkreis eines herkömmlichen Drucksystems und in einem Druckkreis eines erfindungsgemäßen Drucksystems;

### Beschreibung des Ausführungsbeispieles

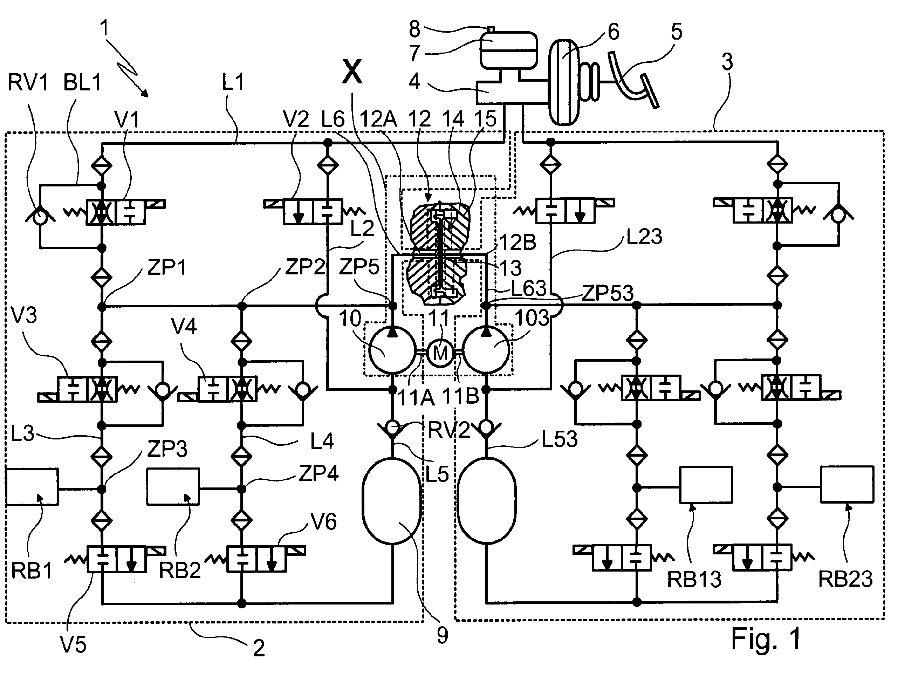

Figur 1 zeigt ein Schaltschema eines Drucksystems 1 bzw. eines Bremsdruckregelsystems eines Fahrzeugs, vorzugsweise eines TCS- oder eines ESP-Systems, welches einen ersten Druckkreis 2 und einen davon getrennten zweiten Druckkreis 3 umfasst. Die Druckkreise 2 und 3 sind identisch aufgebaut, weshalb bei der Erläuterung der Funktionalitäten der Bauteile der Druckkreise 2 und 3 in der nachfolgenden Beschreibung lediglich auf den ersten Druckkreis 2 näher Bezug genommen wird.

Die beiden Druckkreise 2 und 3 sind vorliegend mit einem Hauptbremszylinder 4 verbunden und werden ausgehend von dem Hauptbremszylinder 4 in Abhängigkeit einer fahrerseitigen Betätigung eines Bremspedals 5 mit einem über einen Bremskraftverstärker 6 in an sich bekannter Art und Weise übersetzten Hydraulikdruck beaufschlagt. Der Hauptbremszylinder 4 ist vorliegend mit einem Hydraulikfluidbehälter bzw. mit einem Bremsflüssigkeitsbehälter 7 verbunden, welcher bei aus der Praxis bekannten Fahrzeugen im Motorraum angeordnet und über einen Einfüllstutzen 8 befüllbar ist, wobei in dem Bremsflüssigkeitsbehälter 8 im Wesentlichen Umgebungsdruck vorherrscht.

Stromab des Hauptbremszylinders 4 sind ein Umschaltventil V1 und ein Hochdruckschaltventil V2 in zueinander parallelen Leitungssträngen L1 und L2 angeordnet, so dass der vom Hauptbremszylinder 4 ausgehende Hydraulikfluidvolumenstrom im ersten Druckkreis 2 wahlweise über das Umschaltventil V1 oder das Hauptdruckschaltventil V2 in Richtung von Radbremszylindern RB1 und RB2 führbar ist.

Des Weiteren sind stromab des Umschaltventils V1 bzw. des Hochdruckschaltventils V2 zwei Leitungsverzweigungspunkte ZP1 und ZP2 des Druckkreises 2 vorgesehen, welchen jeweils ein als Umschaltventil ausgeführtes Radeinlassventil V3 bzw. V4 nachgeschaltet ist. Die Radeinlassventile V3 und V4 sowie das Umschaltventil V1 sind jeweils als ein stromlos offenes Ventil ausgeführt, so dass die Ventile V1, V3 und V4 im normalen Betrieb des Drucksystems 1, während dem die Ventile V1, V3 und V4 nicht mit ihren Steuerströmen beaufschlagt sind, geöffnet sind, um bei einer fahrerseitigen Betätigung des Bremspedals 5 eine verzögerungsfreie Bremsung durchführen zu können.

Die Zuleitungen L3 und L4 für die Radbremszylinder RB1 und RB2 zweigen im Bereich zweier weiterer Verzweigungspunkte ZP3 und ZP4 vor zwei Radauslassventilen V5 und V6 ab, welche als stromlos geschlossene Ventile ausgeführt sind, so dass ein fahrerseitig angeforderter Druckaufbau in den Radbremszylindern RB1 und RB2 im normalen Bremsbetrieb des Drucksystems 1 sicher gewährleistet ist.

Vor dem Umschaltventil V1 zweigt eine mit einem Rückschlagventil RV1 ausgeführte Bypassleitung BL1 ab, so dass bei einer Fehlfunktion des Umschaltventils V1, bei der die hydraulische Verbindung zwischen dem Hauptbremszylinder 4 und den Radbremszylindern RB1 und RB2 durch das Umschaltventil V1 unterbrochen ist, über die Bypassleitung BL1 weiterhin zur Verfügung steht und auch bei einem Ausfall des Umschaltventils V1 eine angeforderte Bremsung durchgeführt wird.

Wird über entsprechende Einrichtungen ermittelt, dass das von dem Radbremszylinder RB1 oder dem Radbremszylinder RB2 angesteuerte Rad des Fahrzeuges in unerwünschter Art und Weise blockiert, wird die Druckzufuhr des Radbremszylinders RB1 oder des Radbremszylinders RB2 im Bereich des Radeinlassventils V3 oder des Radeinlassventils V4 durch eine entsprechende Bestromung der elektromagnetischen Betätigungseinheit des betreffenden Ventils gesperrt und das mit dem jeweiligen Radbremszylinder RB1 bzw. RB2 korrespondierende Radauslassventil V5 bzw. V6 derart angesteuert, dass der Druck im Radbremszylinder RB1 oder im Radbremszylinder RB2 um einen erforderlichen Betrag reduziert und die Blockade des Rades aufgehoben ist.

Bei geöffneten Radauslassventilen V5 und V6 wird das über diese beiden Ventile geführte Hydraulikfluid einem Niederdruckspeicher 9, der im Betrieb des Drucksystems 1 vorzugsweise einen Innendruck von 2 bis 7 bar aufweist, zugeführt.

Darüber hinaus besteht auch die Möglichkeit, die Radeinlassventile V3 und V4 bei geschlossenen Radauslassventilen V5 und V6 zu sperren um eine weitere unerwünschte oder unzulässige Druckerhöhung im Bereich der Radbremszylinder RB1 und RB2 zu vermeiden.

Ausgangsseitig steht der Niederdruckspeicher 9 mit einer Saugseite eines vorliegend als Einkolbenpumpe ausgeführten Verdrängerelementes 10 in Verbindung, wobei in einer Verbindungsleitung L5 zwischen dem Niederdruckspeicher 9 und dem Verdrängerelement 10, das eine Konstantpumpe bzw. eine Fördereinrichtung mit einem konstanten Verdrängungsvolumen darstellt, ein Rückschlagventil RV2 angeordnet ist, so dass lediglich Hydraulikfluid aus dem Niederdruckspeicher 9 in Richtung des Verdrängerelementes 10 führbar ist.

Zwischen dem Rückschlagventil RV2 und dem Verdrängerelement 10 mündet der in stromlosem Zustand des Hochdruckschaltventils V2 von diesem gesperrte Leitungsstrang L2 auf der Saugseite des Verdrängerelementes 10 in die Verbindungsleitung L5. Damit ist der von dem Hauptbremszylinder 4 in den ersten Druckkreis 2 eingespeiste Hydraulikfluidvolumenstrom bei entsprechender Bestromung des Hochdruckschaltventils V2 und bei gleichzeitig geschlossenem Umschaltventil V1 zwischen dem Rückschlagventil RV2 und dem Verdrängerelement 10 der Saugseite des Verdrängerelementes 10 zuführbar und der Druck im Bereich der Radbremszylinder RB1 und RB2 bedarfsweise durch zusätzliche Verdichtungsarbeit gegenüber dem vom Bremskraftverstärker ausgehenden Druck aktiv veränderbar.

Das bedeutet, dass die beiden Radbremszylinder RB1 und RB2 bei geschlossenem Umschaltventil V1 und geöffnetem Hochdruckschaltventil V2 mit der Druckseite des Verdrängerelementes 10 bei gleichzeitig geöffneten Radeinlassventilen V3 und V4 fluidisch verbunden sind und der vom Hauptbremszylinder 4 ausgehende Hydraulikdruck im Bereich des Verdrängerelementes 10 entsprechend eines rotatorischen Antriebes eines Elektromotors 11 in angeforderter Art und Weise auf einen Druckwert angehoben wird, der zur Darstellung verschiedener komfortorientierter Funktionen des Drucksystems 1 benötigt wird. Zusätzlich wird eine Ausgleichseinrichtung 12 mit dem Förderdruck des Verdrängerelementes 10 über eine von einem weiteren Verzweigungspunkt ZP5 abzweigende Leitung L6 beaufschlagt. Die Ausgleichseinrichtung 12 ist vorliegend mit einem mit der Leitung L6 des ersten Druckkreises 2 ersten Kanal 12A ausgeführt, der von einer Membran 13 gegenüber einem zweiten mit dem zweiten Druckkreis 3 verbundenen Kanal 12B fluidisch getrennt ist.

Die Membran 13 wird somit auf ihrer dem ersten Druckkreis 2 zugewandten Seite mit dem hydraulischen Druck der Leitung L6 und auf der dem zweiten Druckkreis 3 zugewandten Seite mit dem Druck einer mit dem Verdrängerelement 103 des zweiten Druckkreises 3 verbundenen Leitung L63 beaufschlagt.

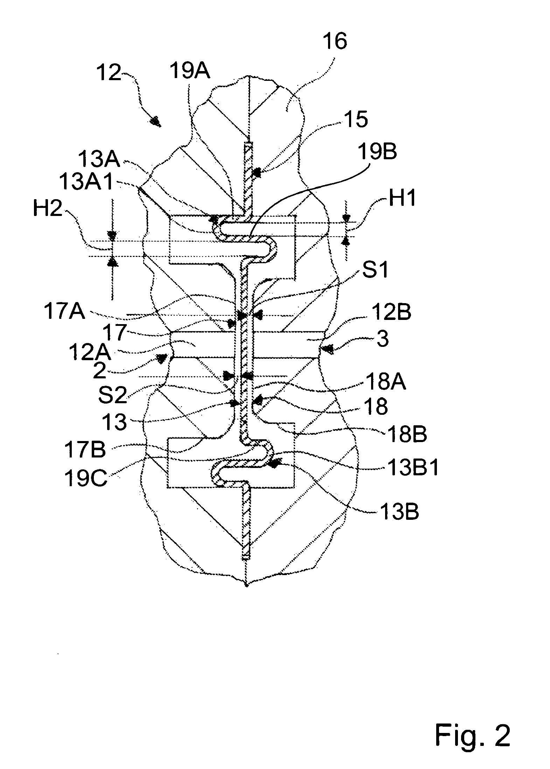

Zudem ist die Membran 13 in einem Druckraum 14 angeordnet und an ihrem äußeren Umfang fest und dichtend in einem Einspannbereich 15 eines Gehäuses 16 der Ausgleichseinrichtung 12 verbunden. Des Weiteren ist die Membran 13 aus einem sowohl gegenüber dem Hydraulikfluid als auch gegenüber dem anliegenden Druck beständig ausgeführten elastischen Material, vorzugsweise Metall, hergestellt, so dass die Membran 13 in Abhängigkeit eines Druckgefälles zwischen den beiden Druckkreisen 2 und 3 in dem Druckraum 14 ausgehend von seiner in Figur 1 und Figur 2 dargestellten Mittellage in Richtung des Kanals 12A oder des Kanals 12B innerhalb eines vordefinierten Bereichs, der von zwei Grenzverformungszuständen der Membran 13 begrenzt ist, verformt werden kann.

Durch die Verformung der Membran 13 verändert sich das Volumen des ersten Druckkreises 2, der mit der damit gleichzeitig einhergehenden Volumenveränderung des zweiten Druckkreises 3 korrespondiert. Dabei sind die Abmessungen des Druckraumes 14, der Kanäle 12A und 12B sowie mechanische Anschläge 17 und 18 ausbildende Wandbereiche des Druckraumes 14 derart aufeinander abgestimmt, dass die Wandungen des Druckraums 14 für einen zwischen zwei Faltenbereichen 13A und 13B der Membran 13 angeordneten ebenen Zwischenbereich 13C der Membran 13 als Anschläge 17 und 18 zur Verfügung stehen und somit der maximale Verformungsbereich der Membran 13 im ebenen Zwischenbereich 13C innerhalb des Druckraums 14 limitiert ist.

Aufgrund der Ausgestaltung der Membran 13 mit den beiden Faltenbereichen 13A und 13B weist die Membran 13 in den Faltenbereichen 13A und 13B die Funktionalität einer so genannten Rollmembran auf, die im Vergleich zu einer vollständig ebenen Membran bei einem Druckgefälle zwischen den beiden Druckkreisen 2 und 3 einer geringeren Spannungsbeanspruchung ausgesetzt ist.

Dies wird dadurch erreicht, dass bei einem positiven Druckgefälle zwischen dem ersten Druckkreis 2 und dem zweiten Druckkreis 3 eine Faltenhöhe H2 zum vorbeschriebenen Druckausgleich zwischen den beiden Druckkreisen 2 und 3 bei gleichzeitig geringen Belastungen der Membran 13 reduziert wird, während die Membran 13 im Bereich zwischen den Anschlägen 17 und 18 lediglich um die Wegstrecke S1 verschoben und an dem Anschlag 18 angelegt wird.

Ist der Druck im zweiten Druckkreis 3 größer als der Druck des Druckkreises 2, wird eine Faltenhöhe H1 des Faltenbereichs 13A zum Druckausgleich zwischen den beiden Druckkreisen 2 und 3 verringert und der Zwischenbereich 13C der Membran 13 um die Wegstrecke S2 in Richtung des Anschlages 17 verschoben und an diesem angelegt, wobei insbesondere im Zwischenbereich 13C nur eine geringe Spannungsbeanspruchung wirkt.

Die Faltenbereiche 13A und 13B sind mit sich überlappenden Bereichen 19A, 19B und 19C ausgeführt, welche bei Druckgleichheit zwischen den beiden Druckkreisen 2 und 3 jeweils durch die definierten Faltenhöhen H1 und H2 zueinander beabstandet sind.

Eine der Membran 13 zugewandte Stirnfläche 17A des Anschlages 17 ist vorliegend größer als einer der Membran 13 zugewandte Stirnfläche 18A des Anschlages 18 ausgeführt, so dass eine Verformung des zweiten Faltenbereiches 13B durch den Anschlag 18 in einer die Funktionalität der Ausgleichseinrichtung 12 nicht beeinträchtigenden Art und Weise beeinflusst wird und andererseits die Membran 13 am Anschlag 17 die größtmögliche Abstützung erhält. Der erste Faltenbereich 13A und der zweite Faltenbereich 13B sind jeweils mit einem in Richtung eines Anschlags 17 oder 18 erstreckenden, gewellten Abschnitt 13A1 bzw. 13B1 ausgeführt, wobei der Anschlag 18, in dessen Richtung sich der zweite Faltenbereich 13B erstreckt, kleiner ist als der Anschlag 17, in dessen Richtung sich der erste Faltenbereich 13A mit seinem gewellten Bereich 13A1 erstreckt.

Um die Verformungszustände der Membran 13 und die daraus resultierenden Spannungszustände in der Membran 13 bei Vorliegen eines Druckgefälles zwischen den beiden Druckkreisen 2 und 3 auch im Übergangsbereich zwischen dem zweiten Faltenbereich 13B und dem Zwischenbereich 13C der Membran 13 gering zu halten, sind die im Wesentlichen zylinderförmig ausgebildeten Anschläge 17 und 18 jeweils im Übergangsbereich zwischen ihren der Membran 13 zugewandten Stirnflächen 17A und 18A und einer Mantelfläche 17B und 18B wenigstens annähernd sphärisch ausgebildet.

Bei einer weiteren nicht näher dargestellten, vorteilhaften Ausgestaltung des Drucksystems nach der Erfindung sind die Anschläge im Bereich ihrer der Membran zugewandten Stirnseiten kugelkappenförmig ausgebildet, so dass ein Verformungszustand im Übergangsbereich zwischen dem zweiten Faltenbereich 13B und dem Zwischenbereich 13C durch eine ganzheitliche und harmonische Verformung des Zwischenbereiches 13C weiter reduziert ist.

Vorliegend ist das durch die maximale Verformbarkeit der Membran 13 begrenzte Verschiebevolumen des jeweils auf einer Seite eines Druckkreises 2 oder 3 in der Ausgleichseinrichtung 12 angeordneten Hydraulikfluids derart bemessen, dass es jeweils dem halben Fördervolumen der Verdrängerelemente 10 bzw. 103 entspricht. Damit dieses Verschiebevolumen auch bei kleinen Druckunterschieden, d. h. wenige Bar, zwischen den Druckkreisen 2 und 3 verschiebbar ist, ist die Membran 13 mit einer entsprechenden Elastizität auszuführen. Andererseits sind die Geometrie des Druckraums 14 und die Faltenbereiche 13A und 13B derart ausgeführt, dass sich die Membran 13 bei Erreichen des maximalen Verschiebevolumens an die Wandung des Druckraums 14 anlegt und kein weiteres Hydraulikfluid innerhalb der Ausgleichseinrichtung 12 verschoben wird.

Die Membran 13 ist vorliegend mit einer derartigen Bauteilelastizität ausgeführt und derart in dem Gehäuse 15 montiert, dass die Membran 13 bei Druckgleichheit in den beiden Druckkreisen 2 und 3 selbsttätig die in der in Figur 1 dargestellten Mittelstellung einnimmt.

Zusätzlich ist die Trennung der beiden Druckkreise 2 und 3 durch das im Bereich der Ausgleichseinrichtung 12 limitierte Verschiebevolumen nach wie vor gewährleistet. Des Weiteren sind Regelungen bei unterschiedlichen Systemdrücken in den beiden Kreisen möglich, so dass die ABS-, TCS- und ESP-Funktionalitäten des Drucksystems 1 durch die Funktionalität der Ausgleichseinrichtung 12 nicht beeinträchtigt sind.

Selbstverständlich liegt es im Ermessen des Fachmannes, die Membran 13 der Ausgleichseinrichtung 12 auch aus einem anderen entsprechend geeignetem Material herzustellen, mittels welchem die vorgeschriebene Funktionalität der Ausgleichseinrichtung 12 darstellbar ist.

So besteht beispielsweise die Möglichkeit, die Membran 13 in Abhängigkeit des jeweils vorliegenden Anwendungsfalles aus einem wenigstens bereichsweise mit Metall verstärkt ausgeführten Kunststoff herzustellen, um die vorbeschriebene Funktionalität der Ausgleichseinrichtung 12 sicher gewährleisten zu können.

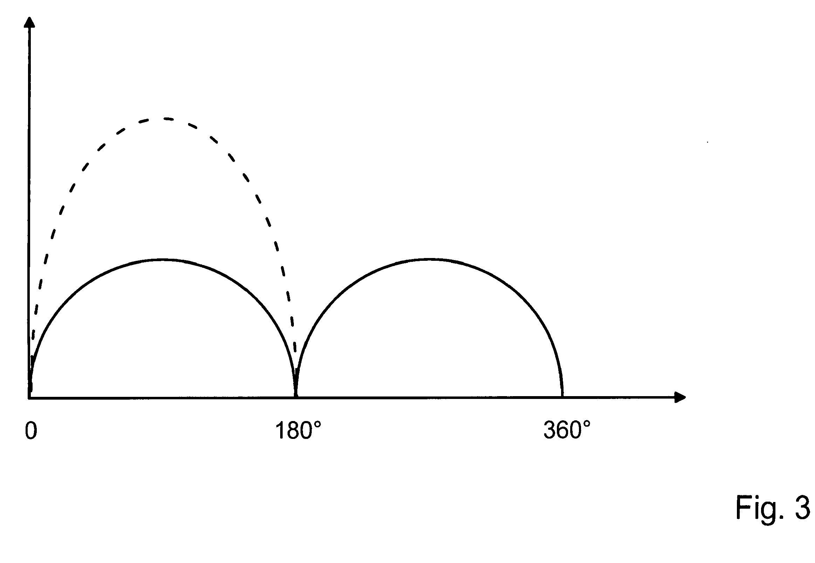

In Figur 3 ist eine grafische Gegenüberstellung zweier qualitativer Verläufe einer Drucküberhöhung in einem Druckkreis eines herkömmlichen Drucksystems und in den Druckkreisen 2 und 3 des erfindungsgemäßen Drucksystems 1 über dem Arbeitswinkelbereich des Exzenterantriebs der Verdrängerelemente 10 und 103 dargestellt, wobei der strichlierte Verlauf die Drucküberhöhung eines aus der Praxis bekannten Drucksystems und der durchgezogene Verlauf die Drucküberhöhung in den Druckkreisen 2 und 3 des in Figur 1 bzw. in Figur 2 dargestellten erfindungsgemäßen Drucksystems 1 qualitativ wiedergibt.

Die beiden Verdrängerelemente 10 und 103 werden vorliegend von dem Elektromotor 11 und auf der Motorwelle 11A bzw. 11B angeordnete und in der Zeichnung nicht näher dargestellte Exzenter angetrieben, so dass die als Einkolbenpumpen ausgeführten Verdrängerelemente 10 und 103 beim aktiven Druckaufbau in den Druckkreisen 2 und 3 über einen Exzenterwinkel kleiner als 180° Hydraulikfluid fördern. In dem verbleibenden Arbeitswinkelbereich findet keine pumpenseitige Förderung statt, weshalb der in Figur 3 strichliert dargestellte Verlauf der Drucküberhöhung eines herkömmlichen Drucksystems bei dem Winkelwert von 180° endet.

Da die beiden Verdrängerelemente der beiden Druckkreise 2 und 3 vorliegend um 180° phasenversetzt zueinander fördern, stellt sich durch den Einsatz der in Figur 2 bzw. in Figur 3 dargestellten Ausgleichseinrichtung 12 der in Figur 3 durch die durchgezogene Linie dargestellte Verlauf der Drucküberhöhung im ersten Druckkreis 2 bzw. im zweiten Druckkreis 3 - bei gleichem Systemdruck in den beiden Druckkreisen - derart ein, dass die Pulsation eines jeden Verdrängerelementes 10 bzw. 103 durch die Verformung der Membran 13 bzw. die Verschiebung des Kolbenelements 16 in der in Figur 3 dargestellten Art und Weise jeweils auf beide Druckkreise 2 und 3 gleichmäßig verteilt wird.

Damit werden die Pulsationshöhen in den Druckkreisen 2 und 3 jeweils halbiert und in der dargestellten Art und Weise auf den gesamten Winkelbereich von 360° verteilt, wodurch die Grundwelligkeit des Drucks in den Druckkreisen 2 und 3 wesentlich vergleichmäßigt wird. Darüber hinaus sind die Druckgradienten zu Beginn der Druckaufbau- und Förderphase der Verdrängerelemente 10 und 103 geringer als bei einem herkömmlichen Drucksystem, da die Verdrängerelemente 10 und 103 jeweils auf ihrer Druckseite mit einem System in Wirkverbindung stehen, welches zu Beginn der Druckaufbau- und Förderphase mit einer erheblich größeren Systemelastizität ausgeführt ist, als herkömmliche Drucksysteme.

Es besteht jedoch auch die Möglichkeit, die Verdrängerelemente 10 und 103 in Abhängigkeit des jeweils vorliegenden Anwendungsfalles derart am Umfang der Motorwellen 11A und 11B zu positionieren, dass der Phasenversatz von dem vorgenannten Winkelwert von 180° um wenige Winkelgrade - vorzugsweise um 5° bis 10° - abweicht, ohne dass die erfindungsgemäße Wirkungsweise der Ausgleichseinrichtung 12 beeinträchtigt wird.

Durch die vorbeschriebenen erfindungsgemäßen Ausgestaltungen eines Drucksystems wird die Pulsation eines Verdrängerelementes mit einfachen Mitteln lediglich während bestimmter Betriebszustände des Drucksystems in ein Pulsationsspektrum eines mit einer doppelten Anzahl an Verdrängungselementen ausgeführten Verdrängerelements überführt, wobei das konstruktiv einfache Prinzip eines Verdrängerelementes mit der einfachen Anzahl an Verdrängungselementen beibehalten wird. So wird beispielsweise die Pulsation einer Einkolbenpumpe mit konstruktiv einfachen Mitteln in das Pulsationsspektrum einer Zweikolbenpumpe überführt.

Des Weiteren ist von Vorteil, dass durch den Einsatz eines erfindungsgemäßen Drucksystems 1 im Bereich einer Bremsanlage eines Kraftfahrzeugs das Pedalgefühl nahezu konstant bleibt, da die Summenelastizität des Hydroaggregats nur geringfügig zunimmt und die Trennung der Druckkreise eines Bremssystems vollständig erhalten bleibt.

## Patentansprüche

1. Drucksystem (1) mit wenigstens zwei jeweils mit einem Verdrängerelement ausgeführten Druckkreisen (2, 3), die jeweils auf einer Druckseite der Verdrängerelemente (10, 103) über eine Ausgleichseinrichtung (12) derart in Wirkverbindung stehen, dass eine Druckerhöhung im ersten Druckkreis (2) zu einer Druckerhöhung im zweiten Druckkreis (3) führt und die Druckerhöhung des ersten Druckkreises (2) im Wesentlichen um die Druckerhöhung des zweiten Druckkreises (3) reduziert ist, wobei die Ausgleichseinrichtung (12) eine elastische Membran (13) aufweist, welche zwischen zwei Grenzverformungszuständen verformbar ist und durch welche die beiden Druckkreise (2, 3) auf den Druckseiten der Verdrängerelemente (10, 103) getrennt sind, **dadurch gekennzeichnet, dass** die Membran (13) umfangsseitig in einem Einspannbereich (15) gehalten ist und die Grenzverformungszustände jeweils durch einen mechanischen Anschlag (17, 18) definiert sind, wobei, dass die Membran (13) mit wenigstens zwei Faltenbereichen (13A, 13B) ausgeführt ist, die mit sich überlappenden Bereichen (19A, 19B, 19C) der Membran (13) ausgebildet sind.

2. Drucksystem nach Anspruch 1, **dadurch gekennzeichnet, dass** ein erster Faltenbereich (13A) der Membran zwischen dem Einspannbereich (15) und einem zweiten Faltenbereich (13B) der Membran (13) angeordnet ist und die beiden Faltenbereiche (13A, 13B) bei Vorliegen einer Druckgleichheit zwischen den beiden Druckkreisen (2, 3) jeweils mit einer definierten Höhe (H1, H2) ausgebildet sind.

3. Drucksystem nach Anspruch 1 oder 2, **dadurch gekennzeichnet, dass** die Membran (13) innerhalb der Faltenbereiche (13A, 13B) mit einem ebenen Zwischenbereich (13C) ausgebildet ist, der mit den Anschlägen (17, 18) zusammenwirkt.

4. Drucksystem nach Anspruch 2 oder 3, **dadurch gekennzeichnet, dass** der erste Faltenbereich (13A) und der zweite Faltenbereich (13B) jeweils mit sich in Richtung eines Anschlags (17, 18) erstreckenden gewellten Abschnitten (13A1, 13B1) ausgeführt sind, wobei eine mit der Membran (13) zusammenwirkende Stirnfläche (18A) des Anschlags (18), in dessen Richtung sich der zweite Faltenbereich (13B) erstreckt, kleiner als die mit der Membran (13) zusammenwirkende Stirnfläche (17A) des Anschlags (17) ist, in dessen Richtung sich der erste Faltenbereich (13A) mit seinem gewellten Bereich (13A1) erstreckt.

5. Drucksystem nach Anspruch 4, **dadurch gekennzeichnet, dass** die Anschläge (17, 18) im Wesentlichen zylinderförmig ausgebildet sind und jeweils im Übergangsbereich zwischen den der Membran (13) zugewandten Stirnflächen (17A, 18A) und einer Mantelfläche (17B, 18B) wenigstens annähernd sphärisch ausgebildet sind.

6. Drucksystem nach Anspruch 4 oder 5, **dadurch gekennzeichnet, dass** die Anschläge (17, 18) im Bereich ihrer der Membran (13) zugewandten Stirnseiten (17A, 18A) kugelkappenförmig ausgebildet sind.

7. Drucksystem nach einem der Ansprüche 1 bis 6, **dadurch gekennzeichnet, dass** die Membran (13) über im Bereich der Anschläge vorgesehene und jeweils mit einem der Druckkreise (2, 3) in Verbindung stehende Kanäle (12A, 12B) mit dem Druck der Druckkreise (2, 3) beaufschlagt wird.

## Claims

1. Pressure system (1) with at least two pressure circuits (2, 3) which are designed in each case with a displacer element and which are in each case operatively connected on a pressure side of the displacer elements (10, 103) via a compensating device (12) in such a way that a pressure rise in the first pressure circuit (2) leads to a pressure rise in the second pressure circuit (3) and the pressure rise of the first pressure circuit (2) is reduced essentially by the amount of the pressure rise of the second pressure circuit (3), the compensating device (12) having an elastic diaphragm (13) which is deformable between two limiting deformation states and by means of which the two pressure circuits (2, 3) are separated on the pressure sides of the displacer elements (10, 103), **characterized in that** the diaphragm (13) is held circumferentially in a tension-mounting region (15), and the limiting deformation states are defined in each case by a mechanical stop (17, 18), the diaphragm (13) being designed with at least two fold regions (13A, 13B) which are formed by mutually overlapping regions (19A, 19B, 19C) of the diaphragm (13).

2. Pressure system according to Claim 1, **characterized in that** a first fold region (13A) of the diaphragm is arranged between the tension-mounting region (15) and the second fold region (13B) of the diaphragm (13), and, in the presence of pressure equality between the two pressure circuits (2, 3), the two fold regions (13A, 13B) are formed in each case with a defined height (H1, H2).

3. Pressure system according to Claim 1 or 2, **characterized in that** the diaphragm (13) is designed, within the fold regions (13A, 13B) with a planar intermediate region (13C) which cooperates with the stops (17, 18).

4. Pressure system according to Claim 2 or 3, **characterized in that** the first fold region (13A) and the second fold region (13B) are designed in each case with corrugated portions (13A1, 13B1) extending in the direction of a stop (17, 18), an end face (18A), cooperating with the diaphragm (13), of the stop (18), in the direction of which the second fold region (13B) extends, being smaller than the end face (17A), cooperating with the diaphragm (13), of the stop (17) in the direction of which the first fold region (13A) extends with its corrugated region (13A1).

5. Pressure system according to Claim 4, **characterized in that** the stops (17, 18) are of essentially cylindrical design and are of at least approximately spherical design in each case in the transitional region between the end faces (17A, 18A) facing the diaphragm (13) and a surface area (17B, 18B).

6. Pressure system according to Claim 4 or 5, **characterized in that** the stops (17, 18) are designed in the form of a spherical cap in the region of their end faces (17A, 18A) facing the diaphragm (13).

7. Pressure system according to one of Claims 1 to 6, **characterized in that** the diaphragm (13) is acted upon by the pressure of the pressure circuits (2, 3) via ducts (12A, 12B) provided in the region of the stops and in each case connected to one of the pressure circuits (2, 3).

## Revendications

1. Système de pression (1) comprenant au moins deux circuits de pression (2, 3) réalisés avec un élément de déplacement, qui sont en liaison fonctionnelle à chaque fois d'un côté pression des éléments de déplacement (10, 103) par le biais d'un dispositif de compensation (12), de telle sorte qu'une augmentation de la pression dans le premier circuit de pression (2) conduise à une augmentation de pression dans le deuxième circuit de pression (3) et que l'augmentation de pression du premier circuit de pression (2) soit réduite sensiblement de l'augmentation de pression du deuxième circuit de pression (3), le dispositif de compensation (12) présentant une membrane élastique (13) qui peut être déformée entre deux états de déformation limite et qui sépare les deux circuits de pression (2, 3) sur les côtés pression des éléments de déplacement (10, 103), **caractérisé en ce que** la membrane (13) est maintenue du côté de la périphérie dans une région de serrage (15) et les états de déformation limite sont définis à chaque fois par une butée mécanique (17, 18), la membrane (13) étant réalisée avec au moins deux régions de pli (13A, 13B) qui sont réalisées avec des régions se chevauchant (19A, 19B, 19C) de la membrane (13).

2. Système de pression selon la revendication 1, **caractérisé en ce qu'**une première région de pli (13A) de la membrane est disposée entre la région de serrage (15) et une deuxième région de pli (13B) de la membrane (13) et les deux régions de pli (13A, 13B) sont à chaque fois réalisées avec une hauteur définie (H1, H2) en présence d'une égalité de pression entre les deux circuits de pression (2, 3).

3. Système de pression selon la revendication 1 ou 2, **caractérisé en ce que** la membrane (13) est réalisée à l'intérieur des régions de pli (13A, 13B) avec une région intermédiaire plane (13C) qui coopère avec les butées (17, 18).

4. Système de pression selon la revendication 2 ou 3, **caractérisé en ce que** la première région de pli (13A) et la deuxième région de pli (13B) sont réalisées à chaque fois avec des portions ondulées (13A1, 13B1) s'étendant dans la direction d'une butée (17, 18), une surface frontale (18A) de la butée (18), coopérant avec la membrane (13), en direction de laquelle s'étend la deuxième région de pli (13B), étant plus petite que la surface frontale (17A) de la butée (17) coopérant avec la membrane (13), en direction de laquelle s'étend la première région de pli (13A) avec sa région ondulée (13A1).

5. Système de pression selon la revendication 4, **caractérisé en ce que** les butées (17, 18) sont réalisées essentiellement sous forme cylindrique et sont réalisées à chaque fois dans la région de transition entre les surfaces frontales (17A, 18A) tournées vers la membrane (13) et une surface d'enveloppe (17B, 18B) au moins approximativement sous forme sphérique.

6. Système de pression selon la revendication 4 ou 5, **caractérisé en ce que** les butées (17, 18) sont réalisées dans la région de leurs côtés frontaux (17A, 18A) tournés vers la membrane (13) sous forme de calotte sphérique.

7. Système de pression selon l'une quelconque des revendications 1 à 6, **caractérisé en ce que** la membrane (13) est sollicitée par la pression des circuits de pression (2, 3) par le biais de canaux (12A, 12B) prévus dans la région des butées et en liaison respectivement avec l'un des circuits de pression (2, 3).
